## Europäisches Patentamt
## European Patent Office
## Office européen des brevets

(11) Publication number: **0 136 222 B1**

(12) **EUROPEAN PATENT SPECIFICATION**

(45) Date of publication of patent specification: **16.03.88**

(51) Int. Cl.⁴: **B 65 D 1/02**

(21) Application number: **84401730.1**

(22) Date of filing: **29.08.84**

(54) Heat resisting biaxial orientation bottles.

(30) Priority: **31.08.83 JP 160047/83**

(43) Date of publication of application:
**03.04.85 Bulletin 85/14**

(45) Publication of the grant of the patent:
**16.03.88 Bulletin 88/11**

(84) Designated Contracting States:
**DE FR GB IT**

(56) References cited:
**EP-A-0 074 246**
**EP-A-0 086 652**
**US-A-3 753 641**
**US-A-3 784 040**

(73) Proprietor: **NISSEI ASB MACHINE CO., LTD.**
**6100-1, Ohazaminamijo Sakakimachi**
**Hanishina-gun Nagano-ken 389-06 (JP)**

(72) Inventor: **Nakamura, Yoshinori c/o Nissei ASB**
**Machine Co**
**Ltd 6100-1,Ohazaminamijo Sakakimachi**
**Hanishina-gun Nagano-ken (JP)**
Inventor: **Miyazawa, Yoshiki c/o Nissei ASB**
**Machine Co. Ltd.**
**6100-1, Ohazaminamijo Sakakimachi**
**Hanishina-gun Nagano-ken (JP)**

(74) Representative: **Schrimpf, Robert et al**
**Cabinet Regimbeau 26, Avenue Kléber**
**F-75116 Paris (FR)**

Courier Press, Leamington Spa, England.

## Description

### Background of the Invention
#### (1) *Field of the Invention*

This invention relates to a heat resisting biaxial orientation bottle in which a crystalline resin such as polyethyleneterephthalate is molded by stretching blow molding.

#### (2) *Description of the Prior Art* (see for instance EP—A—74246)

A biaxial orientation bottle is formed by axially stretching an injected and extrusion molded preform within a mold, and radially expanding it. This stretching blow molding is carried out while holding a neck portion of a preform, and therefore, portions lower than the neck portion of the bottle, that is, a body portion and a bottom portion are subjected to biaxial orientation but the neck portion is in the state wherein it is injection or extrusion molded.

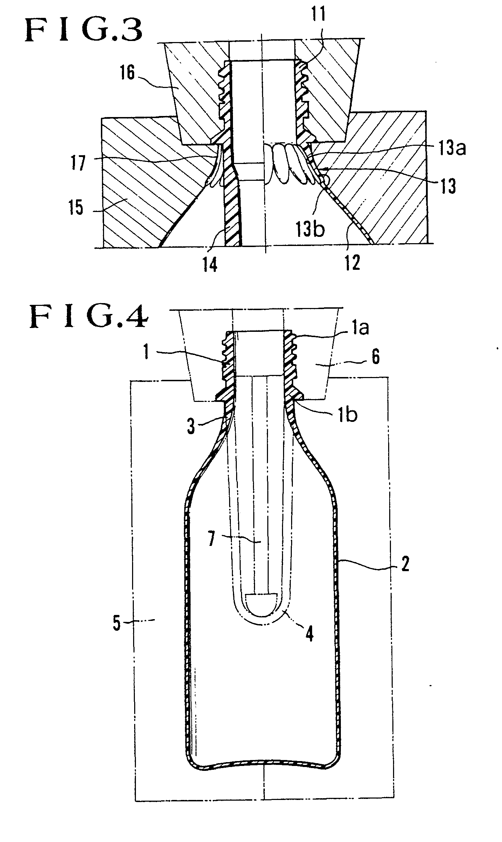

Fig. 4 shows a conventional biaxial orientation bottle together with a preform and a mold.

The neck portion 1 is formed when a preform 4 is molded, and an outer circumference has threads 1a, and a retaining ring 1b is formed in the circumference at the lower portion of the threads 1a.

The body portion 2 and a boundary portion 3 are formed by stretching the preform 4 within the mold 5 in two directions, in an axial direction and in a radial direction, and a wall thickness is reduced from the upper portion of the boundary portion 3 to the body portion 2.

Stretching of the preform 4 is carried out by closing the blow mold 5 while holding the neck portion 1 by a neck mold 6, and using a stretching rod 7 and air pressure. The preform 4 is axially stretched by the stretching rod 7 and at the same time or after which air is blown into the preform 4 to expand it in a radial direction. Axial stretching of the preform 4 extends over the whole portion except a portion of the neck portion 1 held by the neck mold 6, and a portion corresponding to the boundary portion 3 of the preform 4 is axially stretched similarly to a portion corresponding to the body portion 2 but it is not sufficiently stretched in a radial direction since the expansion coefficient thereof is smaller than that of the portion corresponding to the body portion 2.

Enhancement of performances such as pressure resistance, shock resistance, heat resistance, gas barrier and the like of bottles of this kind appears at a portion subjected to biaxial orientation. Since the performance is proportional to the degree of orientation, a portion close to the neck portion 1, particularly a lower portion of the retaining ring 1b is inferior in heat resistance to a portion close to the body portion 2.

When such a biaxial orientation bottle is filled with liquids heated to a temperature substantially same as a molding temperature, the boundary portion 3 between the neck portion 1 and body portion is thermally deformed and distorted, often resulting in an inclination. This results from the fact that in a portion subjected to biaxial orientation, the boundary portion 3 is lowest in orientation degree and smaller in wall thickness than the neck portion 1. Accordingly, where the biaxial orientation bottle is used as a bottle for packing contents which requires heating, the heat resistance of the boundary portion 3 has to be enhanced by some means or other.

### Summary of the Invention

This invention has been achieved in order that a problem of heat resistance in the biaxial orientation bottle may be solved by the simplest means. It is an object of the present invention to provide a biaxial orientation bottle which can increase both inner and outer surface areas of the boundary portion which have to undergo the biaxial orientation due to the shape of the bottle to thereby increase a degree of crystallinity to enhance the heat resistance of the boundary portion and which boundary portion is hard to be thermally deformed even by heating and filling.

It is a further object of the present invention to provide a heat resisting biaxial orientation bottle which is not impaired in external appearance as a packing bottle, which increases in both inner and outer surface areas despite slight expansion of a boundary portion, and which increases a mechanical strength.

In the bottle of the present invention having the above-described objects, the peripheral walls of the boundary portion are formed into a plurality of longitudinal ribs arranged side by side to thereby increase surface areas in the inner and outer surface of the boundary portion, and the heat resistance is enhanced by biaxial orientation proportional to the amount increased in the surface area.

As means for increasing the surface area of the boundary portion, the peripheral walls of the boundary portion can be expanded, in which case, effect is not obtained unless the expansion coefficient is made greater, and if the expansion coefficient is made greater, the external appearance of the bottle is impaired by the inflated boundary portion. Moreover, a wall thickness is reduced and therefore, the mechanical strength is lowered.

However, in a number of longitudinal ribs in which both inner and outer surfaces are inflated outwardly to form curved surfaces, the surface area is increased by the curved surface of each rib, biaxial orientation can be carried out without increasing the expansion coefficient of the boundary portion, and the mechanical strength is not lowered even if the boundary portion is reduced in wall thickness to some extent by the presence of longitudinal ribs.

Furthermore, the number of the longitudinal ribs may be suitably selected, and they can be formed in the boundary portion in consideration of the shape and external appearance of bottles, and therefore, the value of the bottle as a packing bottle is not reduced by enhancement of heat resistance.

This invention will now be described in detail, by way of an illustrated example.

## Brief Description of the Drawings

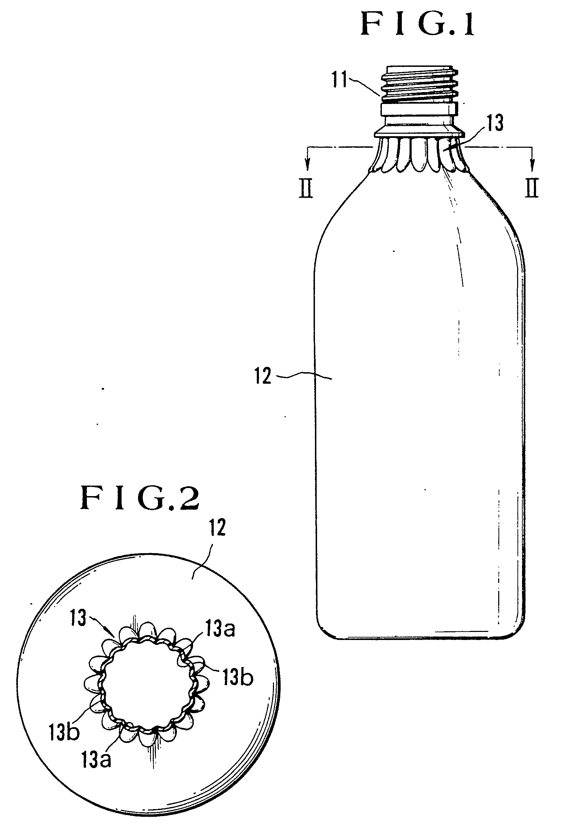

FIG. 1 is an external view of a biaxial orientation bottle in accordance with the present invention; FIG. 2 is a sectional view taken on line II—II of FIG. 1; FIG. 3 is a longitudinal sectional view showing a bottle neck portion together with a mold, a left half showing a state prior to molding, a right half showing a state posterior to molding; and FIG. 4 is a longitudinal sectional view of a conventional biaxial orientation bottle.

## Description of the Preferred Embodiments

In the embodiment of this invention shown in FIGS. 1 to 3, both inner and outer surface areas of a boundary portion between a neck portion 11 and a body portion 12 are increased.

Increasing of the surface area is carried out by continuously forming side by side a number of longitudinal ribs in which inner surfaces 13a and outer surfaces 13b are outwardly curved on the boundary portion 13 on the underside of a retaining ring.

While in this embodiment, sixteen longitudinal ribs are provided to increase the surface area of the boundary portion 13. It will be noted that the number of longitudinal ribs can be suitably selected depending on the diameter of the boundary portion 13. The surface area can be increased as the number of longitudinal ribs increases. However, if the number of longitudinal ribs increases, it becomes difficult, in terms of molding, to curvedly form both the inner surface 13a and outer surface 13b for each rib. The outer surface 13b provides a curved surface but the inner surface is not curved, constituting an obstacle to increase the surface area of the inner surface of the boundary portion. Therefore, the number of longitudinal ribs remains in the range that both the inner and outer surfaces can be curved.

FIG. 3 shows the molded state of the longitudinal ribs. A preform is obtained by injection or extrusion molding. A portion forming a neck portion 11 of a bottle is held by a neck mold 16 and positioned into a blow mold 15, after which the preform 14 is axially stretched by a stretching rod and radially expanded by air pressure, at which time, the peripheral walls of the boundary portion 13 is likewise expanded. To smoothly expand the boundary portion 13 radially, it is preferred that a clearance for adequate expansion is formed between a portion corresponding to the boundary portion 13 of the preform 14 and the mold surface of the blow mold 15. Since the longitudinal ribs are formed by pressing them against the blow mold 15, the required number of laterally continuous recesses 17 are formed endlessly inner-peripherally in a portion of the blow mold 15 corresponding to the boundary portion 13.

Preferably, a temperature of the preform 14 in molding is maintained at about 100°C. The preform 14 is expanded by air pressure of approximately 25 Kg/cm³ whereby the peripheral walls of the boundary portion 13 can be molded into longitudinal ribs wherein both the inner surface 13a and outer surface 13b are curved.

In the bottle in which the boundary portion 13 is constructed by a number of longitudinal ribs continuously formed side by side, as described above, the surface areas of the inner and outer surfaces are increased by outwardly curved and inflated longitudinal ribs, and the orientation degree is also increased equally to a portion of said increment. Therefore, the degree of crystallinity also increases, and a consequence, the heat resistance is enhanced.

Actually, even if a bottle is filled with hot water heated to a temperature above 90°C, there is no distortion of the boundary portion 13 due to the thermal deformation, and no inclination of the neck portion 11 occurred.

The mechanical strength of the boundary portion 13 is increased by the longitudinal ribs, and even if the wall thickness of the boundary portion is formed thinner than prior art, it can sufficiently withstand an external force from the above, and no buckling is produced during the filling process.

Moreover, a number of longitudinal ribs are externally in integral with threads around the neck portion 11, the retaining ring, and the like, and only the longitudinal ribs are not conspicuous. Therefore, the external appearance of a bottle as a packing bottle is not impaired, and bottles as biaxial orientation bottles having the heat resistance have wide applications.

## Claims

1. A heat resisting biaxial orientation bottle having a body portion (12), a neck portion (11) and a boundary portion (13) between the body portion and the neck portion, said bottle being obtained by biaxially stretching within a blow mold (15) and expanding by air pressure an injection or extrusion molded preform (14) formed of a crystalline resin such as polyethyleneterephthalate, characterized in that a number of longitudinal ribs (13a, 13b) are continuously formed side by side on said boundary portion (13), said ribs increasing surface areas of inner surface and outer surface of said boundary portion to enhance the degree of crystallinity and mechanical strength of the boundary portion.

2. A heat resisting biaxial orientation bottle according to claim 1, characterized in that said longitudinal ribs have both inner surface (13a) and outer surface (13b) outwardly and curvedly inflated.

3. A heat resisting biaxial orientation bottle according to claim 1, characterized in that said longitudinal ribs are positioned underside of a retaining ring (1b) of the neck portion (11).

## Patentansprüche

1. Temperaturbeständige, zweiachsig orientierte Flasche mit einem Körper (12), einem Hals (11) und einem Übergang (13) zwischen Körper und Hals, wobei die Flasche durch zweiachsiges Ausweiten in einer Blasform (15) unter Ausdehnen mittels Luftdruck eines durch Spritzen oder Extrudieren geformten Rohlinges (14) aus einem kristallinen Harz, wie einem Polyäthylenterephtalat, erhalten ist, dadurch gekennzeichnet, daß mehrere Längsrippen (13a, 13b) kontinuierlich Seite an Seite im Übergang (13) ausgebildet sind, wobei diese Rippen die Oberflächenbereiche der Innenfläche und der Außenfläche des Überganges vergrößern, um die Kristallinität und die mechanische Festigkeit des Überganges zu verstärken.

2. Temperaturbeständige, zweiachsig orientierte Flasche nach Anspruch 1, dadurch gekennzeichnet, daß die Längsrippen durch das Aufblasen mit nach außen gekrümmten Innenflächen (13a) und Außenflächen (13b) versehen sind.

3. Temperaturbeständige, zweiachsig orientierte Flasche nach Anspruch 1, dadurch gekennzeichnet, daß die Längsrippen unterhalb eines Halterings (1b) am Hals (11) angeordnet sind.

**Revendications**

1. Bouteille à orientation biaxiale, résistante à la chaleur, possédant une partie formant corps (12), une partie formant goulot (11) et une partie limite (13) située entre la partie formant corps et la partie formant goulot, ladite bouteille étant obtenue par étirage biaxial à l'intérieur d'un moule de soufflage (15) et par dilatation, sous l'action de la pression de l'air, d'une préforme (14) moulée par injection ou par extrusion et formée d'une résine cristalline telle que du téraphtalate de polyéthylène, caractérisée en ce qu'un nombre de nervures longitudinales (13a, 13b) sont formées continûment, côte-à-côte, sur ladite partie limite (13), lesdites nervures augmentant les aires de la surface intérieure et de la surface extérieure de ladite partie limite, ce qui accroît le degré de cristallinité et la résistance mécanique de la partie limite.

2. Bouteille à orientation biaxiale, résistante à la chaleur selon la revendication 1, caractérisée en ce que la surface intérieure (13a) et la surface extérieure (13b) desdites nervures longitudinales possèdent toute les deux des formes courbes, renflées vers l'extérieur.

3. Bouteille à orientation biaxiale, résistante à la chaleur selon la revendication 1, caractérisée en ce que lesdites nervures longitudinales sont disposées au-dessous d'un anneau de retenue (1b) de la partie formant goulot (11).

**0 136 222**

# F I G.1

11

13

II        II

12

# F I G.2

12

13    13a

13b

13b

13a

1

## F I G.3

## F I G.4